# EUROPEAN PATENT APPLICATION

(11) **EP 4 660 249 A1**
(43) Date of publication of application: **10.12.2025**
(21) Application number: 24750417.8
(22) Date of filing: 02.02.2024
(51) Int. Cl.: C08L 83/04

(54) **SILICONE COMPOSITION**

(30) Priority: 02.02.2023 JP 2023014924
(71) Applicant: Sekisui Chemical Co., Ltd., Osaka-shi, Osaka 530-8565 (JP); Sekisui Polymatech Co., Ltd., Saitama-city, Saitama 338-0837 (JP)
(72) Inventor: ISHIDA, Keiichi, Mishima-gun, Osaka 618-0021 (JP); KADOWAKI, Kazuki, Mishima-gun, Osaka 618-0021 (JP); ISHIDA, Hiroya, Mishima-gun, Osaka 618-0021 (JP); ISHIKUBO, Masamichi, Saitama-city, Saitama 338-0837 (JP); KUDOU, Hiroki, Saitama-city, Saitama 338-0837 (JP); SAWA, Ryunosuke, Saitama-city, Saitama 338-0837 (JP); ISHIHARA, Miho, Mishima-gun, Osaka 618-0021 (JP); Kekura, Yu, Saitama-city, Saitama 338-0837 (JP)
(74) Representative: Ter Meer Steinmeister & Partner
(86) International application number: PCT/JP2024/003493
(87) International publication number: WO 2024/162468

(57) **Abstract**

Provided is a silicone composition containing an inorganic filler (A), a silicone resin (B), and a fluorescent silicone compound (C), wherein a ratio (IE/IF) of fluorescence intensity at the maximum wavelength of fluorescence of a non-associated form (IF) to excimer emission intensity at the maximum wavelength of excimer emission (IE) of the fluorescent silicone compound (C) upon fluorescence analysis is 0.01 or more and 0.6 or less.

## Description

### Technical Field

The present invention relates to a silicone composition.

### Background Art

In recent years, countermeasures against heat are important for electronic devices due to the development of communication technologies such as 5G, and thus, the demand for heat radiation materials is increasing. In general, a heat radiation material is formed of a resin composition containing a resin and a filler. To achieve a high heat radiation, filling a resin composition highly with a filler or use of a filler having a further high thermal conductivity is effective. However, in the resin composition containing a resin and a filler, the function of the material may be impaired, for example, the flexibility of the composition may deteriorate due to the low compatibility between the resin and the filler. To improve the low compatibility between the resin and the filler, a method for adding an additive having an affinity with both the resin and the filler and a method for adding an additive for improving the dispersing ability to the resin are known.

For example, as the treatment agent for improving the dispersing ability of nanocarbon, Patent Literature 1 discloses a polyorganosiloxane having a polycyclic aromatic group at one end, which has an aromatic condensed ring group. Then, an example using a polyorganosiloxane having a pyrene group as the aromatic condensed ring group is specifically disclosed in Examples. The polyorganosiloxane having an aromatic condensed ring group is considered to be capable of improving the dispersing ability by utilizing the π-π interaction with nanocarbon.

### Citation List

### Patent Literature

PTL1: JP 2018-197300 A

### Summary of Invention

### Technical Problem

However, the flexibility is reduced in the compositions described in Patent Literatures 1 in which a treatment agent is added, which is problematic.

Thus, an object of the present invention is to provide a resin composition having a high flexibility by enhancing the dispersing ability of a filler.

### Solution to Problem

The present inventors have intensively studied, and as a result, found that the above problem can be solved by adjusting the ratio of fluorescence intensity at the maximum wavelength of fluorescence (IF) to excimer emission intensity at the maximum wavelength of excimer emission (IE) of a fluorescent silicone compound upon fluorescence analysis of a silicone composition to 0.01 or more and 0.6 or less, thereby completing the present invention.

That is, the present invention relates to the following [1] to [9].
[1] A silicone composition comprising an inorganic filler (A), a fluorescent silicone compound (B), and a silicone resin (C) other than the fluorescent silicone compound (B),
   an intensity ratio (IE/IF) of excimer emission intensity at a maximum wavelength of excimer emission (IE) to fluorescence intensity at a maximum wavelength of fluorescence of a non-associated form (IF) of the fluorescent silicone compound (B) upon fluorescence analysis of the silicone composition being 0.01 or more and 0.6 or less.
[2] The silicone composition according to [1], wherein the fluorescent silicone compound (B) comprises a fluorescent silicone compound having a polycyclic aromatic structure.
[3] The silicone composition according to [1] or [2], wherein the fluorescent silicone compound (B) is at least one selected from the group consisting of a fluorescent silicone compound (B1) having a structure of pyrene or a pyrene derivative and a fluorescent silicone compound (B2) having a structure of perylene or a perylene derivative.
[4] The silicone composition according to any one of [1] to [3], wherein the inorganic filler (A) is an inorganic filler having π electrons.
[5] The silicone composition according to [4], wherein the inorganic filler having π electrons comprises at least one selected from the group consisting of boron nitride, a carbon nanotube, a carbon fiber, graphite, and graphene.
[6] The silicone composition according to [3], wherein the fluorescent silicone compound (B1) having a structure of pyrene or a pyrene derivative has a maximum peak of fluorescence of the non-associated form at a wavelength range of 370 nm or more and 430 nm or less and has a maximum peak of excimer emission at a wavelength range of 430 nm or more and 550 nm or less.
[7] The silicone composition according to [3], wherein the fluorescent silicone compound (B2) having a structure of perylene or a perylene derivative has a maximum peak of fluorescence of the non-associated form at a wavelength range of 430 nm or more and 530 nm or less and has a maximum peak of excimer emission at a wavelength range of 490 nm or more and 700 nm or less.
[8] The silicone composition according to any one of [1] to [7], wherein a content of the fluorescent silicone compound (B) is 5% by mass or more based on the total amount of the fluorescent silicone compound (B) and the silicone resin (C).
[9] The silicone composition according to any one of [1] to [8], wherein an amount of aromatic units of the fluorescent silicone compound (B) to a total specific surface area of the inorganic filler (A) is 0.0005 mmol/m² or more.
[10] The silicone composition according to any one of [1] to [9], wherein the silicone resin (C) is at least one of an organopolysiloxane having an alkenyl group and an organopolysiloxane having a hydrosilyl group.

### Advantageous Effects of Invention

According to the present invention, a resin composition having a high flexibility can be provided by enhancing the dispersing ability of the filler.

### Description of Embodiments

### [Silicone composition]

Hereinafter, the silicone composition of the present invention will be described in detail.

The silicone composition of the present invention contains an inorganic filler (A), a fluorescent silicone compound (B), and a silicone resin (C).

In the present invention, in the fluorescent silicone compound (B), the intensity ratio (IE/IF) of excimer emission intensity at a maximum wavelength of excimer emission (IE) to fluorescence intensity at a maximum wavelength of fluorescence of a non-associated form (IF) of the fluorescent silicone compound upon fluorescence analysis of the silicone composition is 0.01 or more and 0.6 or less. When IE/IF of the fluorescent silicone compound upon fluorescence analysis of the silicone composition (hereinafter, also simply referred to as "IE/IF") is more than 0.6, the fluorescent silicone compound (B) may be selfaggregated by the π-π interaction and the like, and the flexibility of the silicone composition may be impaired. Specifically, when a conventional polyorganosiloxane having a polycyclic aromatic group at one end as described in Patent Literature 1 is used, the compound is easily aggregated by the π-π interaction due to the aromatic group. Thus, the viscosity of the silicone composition increases and the flexibility thereof is reduced. Meanwhile, when IE/IF is the above upper limit or less as in the present invention, the fluorescent silicone compound (B) is not liberated in the composition without being aggregated and can exert a good flexibility. That is, IE/IF of the above upper limit or less indicates the properties of excimer emission due to the concentration of free components of the fluorescent silicone compound (B), and IE/IF within a certain range means a state where the interaction of the fluorescent silicone compound (B) is controlled. In the present invention, IE/IF is preferably as low as possible from the viewpoint of suppressing the self-aggregation of the fluorescent silicone compound (B); however, when IE/IF is less than 0.01, the content of the fluorescent silicone compound (B) is insufficient, and it is difficult to sufficiently disperse the inorganic filler (A) in the silicone composition. From the above viewpoints, IE/IF is preferably 0.02 or more and 0.59 or less, and more preferably 0.03 or more and 0.5 or less.

Examples of the method for setting IE/IF to the range of the above lower limit value or more and the above upper limit value or less include the control of the structure and molecular weight of the fluorescent silicone compound (B) mentioned later, and suitable adjustment of the content (concentration) thereof.

In the present invention, IE means the intensity of excimer emission of the fluorescent silicone compound (B) formulated in the silicone composition in a state of being selfaggregated. IF means the intensity of fluorescence emitted by the fluorescent silicone compound (B) formulated in the silicone composition as a single body (that is, not selfaggregated). IE and IF are obtained by measuring the silicone composition.

A plurality of maximum wavelengths of fluorescence of the non-associated form of the fluorescent silicone compound (B) may be confirmed sometimes, and in such a case, the fluorescence intensity at the maximum wavelength having the shortest wavelength is determined as IF.

The ratio of the fluorescence intensity (IE/IF) is calculated by determining the intensity ratio of each fluorescence peak in the measured fluorescence spectrum.

### (Inorganic filler (A))

The silicone composition of the present invention contains an inorganic filler (A). By containing the inorganic filler (A), an excellent thermal conductivity can be imparted to the silicone composition. As the inorganic filler (A), an inorganic filler having π electrons is preferably used. The inorganic filler (A) having π electrons has a six-membered ring atomic structure as a structural unit, and the six-membered ring atomic structure preferably has π electrons. Specific examples of the inorganic filler having π electrons include boron nitride and a carbon material.

Examples of boron nitride include hexagonal boron nitride, and more specific examples thereof include a boron nitride nanotube, a boron nitride nanosheet, and a hexagonal boron nitride particle.

The boron nitride nanotube is a tubular material formed of hexagonal boron nitride. An ideal structure of the boron nitride nanotube is any structure where a hexagonal network surface forms a tube so as to be in parallel with a tube axis to form a single tube or a multitube. The boron nitride nanotube is referred to as "single wall tube" when it is in the form of a single tube, and is referred to as "multiwall tube" when it is in the form of a multiple tube. Any of the single-wall tube and the multi-wall tube may be used as the boron nitride nanotube, or these may be used in combination.

For example, the boron nitride nanotube has an average diameter of 1 nm or more and 70 nm or less and an average length of 100 nm or more and 50 µm or less. By setting the average diameter and the average length within the above range, the thermal conductivity of the silicone composition is easily enhanced while making the flexibility of the silicone composition favorable.

The average diameter of the boron nitride nanotube is preferably 3 nm or more, and more preferably 4 nm or more. The average diameter of the boron nitride nanotube is preferably 10 nm or less, and more preferably 8 nm or less. The average length of the boron nitride nanotube is preferably 500 nm or more, and more preferably 1 µm or more, and preferably 20 µm or less, more preferably 8 µm or less, and still more preferably 5 µm or less.

The diameter of the boron nitride nanotube refers to the outer diameter in the case of a single-wall tube, and in the case of a multi-wall tube, it means the outer diameter of a tube positioned on the outermost side. The diameter and the length of the boron nitride nanotube may be measured in an image obtained by observation using an electron microscope such as TEM (transmission electron microscope), and the average diameter and the average length may be determined with the respective arithmetic averages with respect to any 50 boron nitride nanotubes. The same applies to the diameter and the length of the carbon nanotube mentioned later.

The boron nitride nanosheet is formed of boron nitride and has an ultrathin two-dimensional sheet structure, and has, for example, a structure where one or more hexagonal boron nitride layers are stacked. For example, one having an average thickness of 20 nm or less is used as the boron nitride nanosheet. From the viewpoint of enhancing the thermal conductivity while making the silicone composition sufficiently flexible, the boron nitride nanosheet preferably has an average thickness of less than 10 nm, more preferably 6 nm or less, and still more preferably 4 nm or less. The lower limit of the average thickness of the boron nitride nanosheet is not particularly limited, and is, for example, 1 nm.

The size of the boron nitride nanosheet is not particularly limited, and has, for example, an average longest diameter of 200 nm or more and 3 µm or less, and preferably 500 nm or more and 2 µm or less.

The thickness and longest diameter of the boron nitride nanosheet can be measured, for example, in an image obtained by observation using an electron microscope such as TEM (transmission electron microscope), and the average thickness and average longest diameter of the boron nitride nanosheet may be determined with the respective arithmetic average with respect to any 50 boron nitride nanosheets in the image from the electron microscope. The same applies to the longest diameter and thickness of the carbon nanosheet mentioned later.

The hexagonal boron nitride particle is a particulate boron nitride particle other than the boron nitride nanosheet and the boron nitride nanotube. The shape thereof is not particularly limited, and the boron nitride particle may be in any shape such as scaly, spherical, a polygonal shape, and an indefinite shape. The hexagonal boron nitride particle may be an agglomerate in which a plurality of primary particles is aggregated.

The primary particle size of the hexagonal boron nitride particle is not particularly limited, and may be a nano size or a micro size. For example, the average primary particle size of the hexagonal boron nitride particle may be, for example, 5 nm or more and 100 µm or less, preferably 10 nm or more and 50 µm or less, and more preferably 0.1 µm or more and 40 µm or less.

The particle size of the agglomerate is also not particularly limited, and the average particle size of the agglomerate is, for example, 0.1 µm or more and 250 µm or less, more preferably 0.5 µm or more and 200 µm or less, and still more preferably 1 µm or more and 150 µm or less.

The primary particle size of the hexagonal boron nitride particle and the particle size of the agglomerate may be obtained by measuring the maximum particle size in an image obtained by observation using an electron microscope such as TEM (transmission electron microscope) or SEM (scanning electron microscope). The average particle size such as the average primary particle size may be determined as the arithmetic average of the maximum particle sizes of arbitrary 50 particles. The same applies to other fillers such as graphite particles mentioned later.

Examples of the carbon material include, but are not particularly limited to, a carbon fiber, a carbon nanotube, a carbon nanosheet, graphite, and graphene.

The carbon fiber is preferably graphitized carbon fiber. The graphitized carbon fiber has a high thermal conductivity in its fiber axis direction because crystal planes (that is, planes of six-membered ring networks) of graphite are arranged in the fiber axis direction. The graphitized carbon fiber preferably has a high degree of graphitization.

The fiber diameter of the graphitized carbon fiber is not particularly limited, and for example, the average diameter is 1 µm or more and 30 µm or less, and preferably 5 µm or more and 20 µm or less. When the fiber diameter is within the above range, the silicone composition is industrially easily produced and the thermal conductivity of the silicone composition is easily increased.

The average fiber length of the carbon fiber is, as described above, preferably 10 µm or more and 600 µm or less, more preferably 15 µm or more and 500 µm or less, and still more preferably 20 µm or more and 300 µm or less.

The average diameter and average fiber length of the carbon fiber may be measured in an image obtained by observation using an electron microscope such as TEM (transmission electron microscope) or SEM (scanning electron microscope), and arithmetic means of the diameters and fiber lengths of arbitrary 50 carbon fibers may be determined as the average diameter and the average fiber length, respectively.

A carbon nanotube is a material having a structure in which a graphite sheet having hexagonal network arrangements of carbon atoms is wound into a cylindrical shape, and a carbon nanotube in which a graphite sheet is wound into a single layer is referred to as a single-walled carbon nanotube, and one in which graphite sheets are wound into a multi-layer is referred to as a multi-walled carbon nanotube.

In the present invention, the type of the carbon nanotube is not particularly limited, and may be any of a single-walled carbon nanotube, a multi-walled carbon nanotube, and a combination thereof.

The average diameter of the carbon nanotube is preferably 1 nm or more and 100 nm or less, and more preferably 2 nm or more and 15 nm or less. The average length of the carbon nanotube is preferably 0.1 µm or more and 1000 µm or less, and more preferably 10 µm or more and 500 µm or less.

A carbon nanosheet has a structure in which hexagonal network arrangements of carbon atoms are arranged along the plane direction and has an ultrathin two-dimensional sheet structure, and has, for example, a structure formed from a single layer or a plurality of laminated layers of hexagonal network arrangements of carbon atoms.

The carbon nanosheet has, for example, an average thickness of 20 nm or less, and preferably 10 nm or less. The lower limit of the average thickness of the carbon nanosheet is not particularly limited, and is, for example, 0.7 nm. The size of the carbon nanosheet is not particularly limited, and has, for example, an average longest diameter of 0.2 µm or more and 3 µm or less, and preferably 5 µm or more and 2.5 µm or less.

Examples of graphite include a graphite particle. The graphite particle is a particle other than the carbon fiber, carbon nanotube, and carbon nanosheet described above. The shape thereof is not particularly limited, and the graphite particle may be in any shape such as scaly, spherical, a polygonal shape, and an indefinite shape. The graphite particle may be an agglomerate in which a plurality of primary particles is aggregated.

For example, the average primary particle size of the graphite particle may be, for example, 5 nm or more and 100 µm or less, preferably 10 nm or more and 50 µm or less, and more preferably 0.1 µm or more and 40 µm or less.

The particle size of the agglomerate is also not particularly limited, and the average particle size of the agglomerate is, for example, 0.1 µm or more and 250 µm or less, more preferably 0.5 µm or more and 200 µm or less, and still more preferably 1 µm or more and 150 µm or less.

Graphene has a plane layer in the shape of a hexagonal network, and is, for example, obtained by separating the layers of graphite having a layered structure in which plane layers in the shape of a hexagonal network are laminated by van der Waals force. The average thickness of graphene is, for example, 3 nm or more and 100 nm or less, and preferably 7 nm or more and 50 nm or less. The average thickness can be measured, for example, in an image obtained by observation using TEM (transmission electron microscope), and is preferably determined by an arithmetic mean of arbitrary 50 points in the image by the electron microscope.

In the present invention, when an inorganic filler having π electrons is used as the inorganic filler (A), it is preferable to contain at least one selected from the group consisting of boron nitride, a carbon nanotube, a carbon fiber, graphite, and graphene. By using any of these inorganic fillers among inorganic fillers having π electrons, the thermal conductivity of the silicone composition is easily enhanced. Since these inorganic fillers are excellent in adsorptivity with the fluorescent silicone compound (B), the inorganic filler is easily formulated in a state of being suitably dispersed in the silicone composition.

As the inorganic filler (A), an inorganic filler having no π electrons may be used. Examples of the inorganic filler having no π electrons include, but are not particularly limited to, an oxide, a nitride, a carbide, and a metal hydroxide.

Examples of the oxide include, for example, metal oxides such as iron oxide, zinc oxide, aluminium oxides such as alumina, magnesium oxide, titanium oxide, cerium oxide, and zirconium oxide; and oxides other than metal oxides, such as silicon dioxide (silica).

Examples of the nitride include, for example, metal nitrides such as aluminum nitride, gallium nitride, chrome nitride, tungsten nitride, magnesium nitride, molybdenum nitride, and lithium nitride; and nitrides other than metal nitrides, such as silicon nitride.

Examples of the carbide include, for example, metal carbides such as aluminum carbide, titanium carbide, and tungsten carbide; and carbides other than metal carbides, such as silicon carbide and boron carbide.

Examples of the metal hydroxide include aluminum hydroxide, calcium hydroxide, and magnesium hydroxide.

When an inorganic filler having no π electrons is used, a metal oxide is preferably used, and aluminum oxide is more preferably used.

The average primary particle size of the inorganic filler having no π electrons is not particularly limited, and is preferably 0.1 µm or more and 100 µm or less, more preferably 0.5 µm or more and 50 µm or less, and still more preferably 0.5 µm or more and 15 µm or less.

The above inorganic filler (A) may be used singly, or two or more may be used in combination.

The specific surface area of the inorganic filler (A) is not particularly limited, and is preferably 0.1 cm²/g or more and 1000 cm²/g or less, more preferably 0.3 cm²/g or more and 500 cm²/g or less, and still more preferably 0.5 cm²/g or more and 300 cm²/g or less.

By setting the specific surface area to the predetermined range, it is easy to make the particle size, length, and the like of the inorganic filler (A) suitable and to suitably disperse the inorganic filler (A) into the silicone composition. In addition, it is also easy to moderately enhance the thermal conductivity while maintaining the flexibility of the silicone composition.

The specific surface area of the inorganic filler (A) is measured using an automated specific surface area/pore size distribution measurement apparatus TriStarII (TriStarII manufactured by SHIMADZU CORPORATION).

The filling rate of the inorganic filler (A) in the silicone composition is preferably 10% by volume or more and 98% by volume or less based on the total amount of the silicone composition. By setting the filling rate of the inorganic filler (A) within the above range, the thermal conductivity can be enhanced, while maintaining the flexibility of the silicone composition. The filling rate of the inorganic filler (A) in the silicone composition is more preferably 15% by volume or more and 95% by volume or less, and still more preferably 20% by volume or more and 90% by volume or less.

The content of the inorganic filler (A) having π electrons in the silicone composition is preferably 50% by volume or more, more preferably 70% by volume or more, and still more preferably 80% by volume or more based on the total amount of the inorganic filler (A). By setting the content of the inorganic filler (A) having π electrons within the above range, the thermal conductivity can be enhanced, while maintaining the flexibility of the silicone composition. The content of the inorganic filler (A) having π electrons in the silicone composition may be 100% by volume or less, 95% by volume or less, or 90% by volume or less based on the total amount of the inorganic filler (A).

### (Fluorescent silicone compound (B))

The silicone composition of the present invention contains a fluorescent silicone compound (B). Since the fluorescent silicone compound (B) is excellent in the adsorptivity with the inorganic filler (A), the inorganic filler (A) can be suitably dispersed in the silicone composition by containing the fluorescent silicone compound (B), so that an excellent flexibility can be imparted to the silicone composition. The fluorescent silicone compound (B) is a compound having a polysiloxane backbone and a function of emitting fluorescence. Examples of the structure having the function of emitting fluorescence include structures having a wide conjugated system, such as a polycyclic aromatic structure.

The fluorescent silicone compound (B) used in the present invention preferably contains a fluorescent silicone compound having a polycyclic aromatic structure. Examples of the polycyclic aromatic structure include conjugated aromatic structures having three or more conjugated aromatic six-membered rings, and specific examples thereof include a condensed ring compound such as pyrene, a pyrene derivative, perylene, or a perylene derivative. The conjugated aromatic structure is specifically the same as "B" described in the formula (1) mentioned later, the detailed description thereof is omitted. The number of the above conjugated aromatic structure, that is, the number of "B" per molecule is preferably 1 or more and 5 or less, more preferably 1 or 2, and most preferably 1 as mentioned later.

Thus, the fluorescent silicone compound (B) is preferably at least one selected from a fluorescent silicone compound (B1) having a structure of pyrene or a pyrene derivative, and a fluorescent silicone compound (B2) having a structure of perylene or a perylene derivative, as mentioned later.

The fluorescent silicone compound (B1) having a structure of pyrene or a pyrene derivative preferably has a maximum peak of fluorescence of the non-associated form at a wavelength range of 370 nm or more and 430 nm or less and a maximum peak of excimer emission at a wavelength range of 430 nm or more and 550 nm or less.

In the silicone composition of the present invention, the fluorescent silicone compound (B2) having a structure of perylene or a perylene derivative preferably has a maximum peak of fluorescence of the non-associated form at a wavelength range of 430 nm or more and 530 nm or less and a maximum peak of excimer emission at a wavelength range of 490 nm or more and 700 nm or less.

In the fluorescent silicone compound (B1) having a structure of pyrene or a pyrene derivative, the wavelength range (370 nm or more and 430 nm or less) at which the maximum peak of fluorescence of the non-associated form is confirmed is preferably 370 nm or more and 410 nm or less, and more preferably 370 nm or more and 390 nm or less. In this compound, the wavelength range (430 nm or more and 550 nm or less) at which the maximum peak of excimer emission is confirmed is preferably 450 nm or more and 530 nm or less, and more preferably 460 nm or more and 500 nm or less.

In the fluorescent silicone compound (B2) having a structure of perylene or a perylene derivative, the wavelength range (430 nm or more and 530 nm or less) at which the maximum peak of fluorescence of the non-associated form is confirmed is preferably 430 nm or more and 500 nm or less, and more preferably 440 nm or more and 460 nm or less. In this compound, the wavelength range (490 nm or more and 700 nm or less) at which the maximum peak of excimer emission is confirmed is preferably 500 nm or more and 650 nm or less, and more preferably 520 nm or more and 600 nm or less.

### <Fluorescent silicone compound represented by formula (1)>

The fluorescent silicone compound in the present invention preferably has a structure represented by the following formula (1). 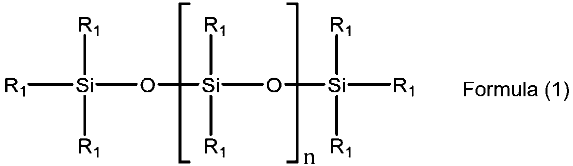
wherein each R₁ is independently a group represented by A-B, a monovalent hydrocarbon group having 1 to 4 carbon atoms, or a hydrogen atom,
at least one R₁ is a group represented by A-B and at least one R₁ is a hydrocarbon group among a plurality of R₁,

A is a divalent organic group bonded to a silicon atom, and B has three or more and six or less conjugated aromatic six-membered rings,
when an atom bonded to the aromatic six-membered ring contained in B is defined as an α-position atom, an atom bonded to the α-position atom is defined as a β-position atom, and an atom bonded to the β-position atom other than the α-position atom is defined as a γ-position atom among atoms constituting A, any of the α-position atom, the β-position atom, and the γ-position atom is a heteroatom, and
the letter of n is an integer of 1 or more.

The above fluorescent silicone compound having a structure represented by the formula (1) has three or more and six or less conjugated aromatic six-membered rings and includes a moiety having a large conjugated system in the molecular structure. Thus, the fluorescent silicone compound has a high adsorptivity to the inorganic filler (A) having π electrons due to the π-π interaction, and thus, easily disperses the inorganic filler (A).

Each R₁ in the formula (1) is independently a group represented by A-B, a monovalent hydrocarbon group having 1 to 4 carbon atoms, or a hydrogen atom.

At least one R₁ among a plurality of R₁ is a group represented by A-B. A is a divalent organic group and is bonded to a silicon atom in the formula (1). At least one R₁ among a plurality of R₁ is a monovalent hydrocarbon group having 1 to 4 carbon atoms, and R₁ other than the group represented by A-B among a plurality of R₁ is preferably a monovalent hydrocarbon group having 1 to 4 carbon atoms.

Among atoms constituting A, any of the α-position atom, the β-position atom, and the γ-position atom is a heteroatom. Consequently, the self-aggregation of the fluorescent silicone compound (B) is reduced and the flexibility of the silicone composition is increased. From the viewpoint of enhancing the flexibility of the silicone composition, the α-position atom or the β-position atom is preferably a heteroatom, and the α-position atom is more preferably a heteroatom.

Here, the α-position atom refers to an atom bonded to an aromatic six-membered ring contained in B (that is, an aromatic six-membered ring of three or more and six or less conjugated aromatic six-membered rings contained in B) among atoms constituting A. The β-position atom refers to an atom bonded to the α-position atom among atoms constituting A. The γ-position atom refers to an atom bonded to the β-position atom and is an atom other than the α-position atom. A may have a heteroatom in the moiety other than the α-position atom, the β-position atom, and the γ-position atom.

The heteroatom is not particularly limited, and examples thereof include an oxygen atom, a nitrogen atom, a sulfur atom, and a boron atom, and above all, from the viewpoint of effectively enhancing the flexibility of the silicone composition, an oxygen atom is preferable.

A is preferably a divalent organic group having 11 or less carbon atoms, and more preferably a divalent organic group having 10 or less carbon atoms. Thus, the fluorescent silicone compound in which the number of carbon atoms of A is a certain number or less is preferable because it easily enhances the dispersing ability of the inorganic filler (A). The lower limit of the number of carbon atoms of A is not particularly limited, and A is preferably a divalent organic group having 4 or more carbon atoms.

Since A has a heteroatom as described above, A has a structural unit having a heteroatom. Examples of the structural unit include an ether, an ester, an amide, a urethane, a thioether, and a thioester, and above all, an ether or an ester is preferable, an ether is more preferable, and a cyclic ether is particularly preferable, from the viewpoint of enhancing the dispersing ability to the inorganic filler (A) and enhancing the flexibility. The cyclic ether refers to an ether having a structure in which carbon in a cyclic hydrocarbon is substituted with oxygen.

From the viewpoint of enhancing the dispersing ability of the inorganic filler (A) and enhancing the flexibility, A preferably has a backbone represented by the following formula (5-1) or formula (5-2).

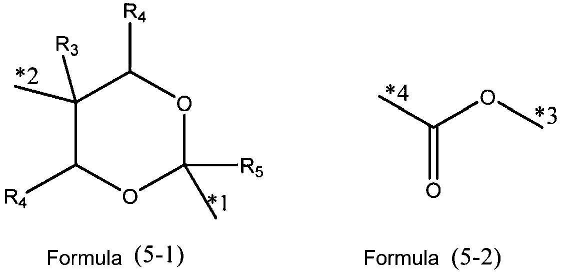

In the formula (5-1), each of the marks of * 1 and *2 is a bond, and R₄ is a hydrogen atom or a hydrocarbon group having 1 to 4 carbon atoms, and preferably a hydrogen atom. Two R₄ may be the same or different from each other. R₃ is a hydrogen atom or a hydrocarbon group having 1 to 4 carbon atoms, preferably a hydrocarbon group having 1 to 4 carbon atoms, more preferably a hydrocarbon group having 1 to 3 carbon atoms, and still more preferably an ethyl group. R₅ is a hydrogen atom or a hydrocarbon group having 1 to 4 carbon atoms, and preferably a hydrogen atom. Each oxygen atom in the formula (5-1) is the β-position atom or the γ-position atom described above, and preferably the β-position atom.

In the formula (5-2), each of the marks of *3 and *4 is a bond. The oxygen atom having a bond of *3 is the α-position atom, the β-position atom, or the γ-position atom described above.

Among those described above, A preferably has a backbone represented by the formula (5-1).

Further, from the viewpoint of enhancing the dispersing ability of the inorganic filler (A) and enhancing the flexibility, A is preferably any structure represented by the following formula (6) to formula (10).

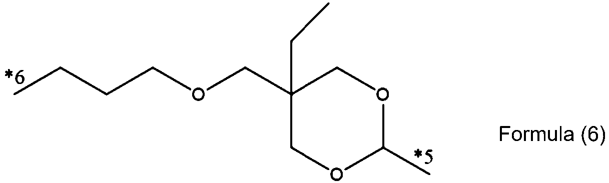

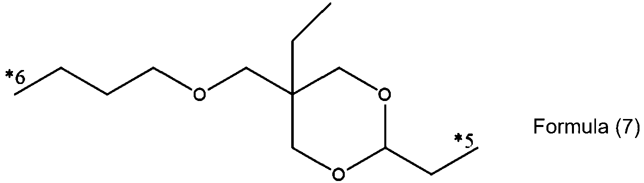

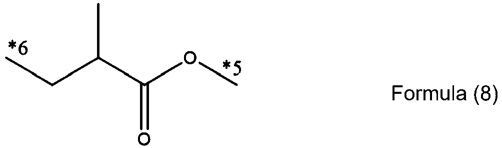

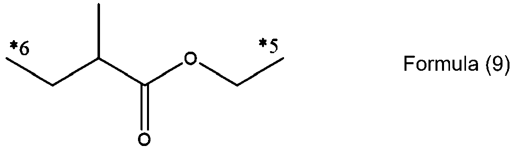

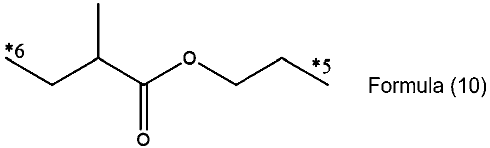

Each of marks of *5 in the formula (6) to the formula (10) is a bond bonded to an aromatic six-membered ring contained in B, and each of marks of *6 is a bond bonded to a silicon atom in the formula (1).

B in the formula (1) has three or more and six or less conjugated aromatic six-membered rings. Conjugation means that unsaturated bonds and single bonds are alternately arranged in a molecular structure, and stabilization due to the interaction of p-orbitals, the delocalization of electrons (electrons are present over the entire conjugated system), and the like are caused. Three or more and six or less conjugated aromatic six-membered rings are included in the concept of the above polycyclic aromatic structure.

When the number of aromatic six-membered rings is 6 or less, the self-aggregation of the fluorescent silicone compound (B) is reduced, and when the number of aromatic six-membered rings is 3 or more, the adsorptivity with the inorganic filler (A) is enhanced and the dispersing ability of the inorganic filler (A) is enhanced.

From the viewpoint of enhancing both the adsorptivity with the inorganic filler (A) and the flexibility of the silicone composition with good balance, the number of aromatic six-membered rings is preferably 4 or more and 5 or less.

Three or more and six or less conjugated aromatic six-membered rings may be a condensed ring compound constituted by three or more and six or less aromatic six-membered rings or a non-condensed ring compound constituted by three or more and six or less aromatic six-membered rings, and is preferably a condensed ring compound. Thus, when B contains a condensed ring compound or B is a condensed ring compound, the adsorptivity to the inorganic filler (A) is further enhanced, which is preferable from the viewpoint of enhancing the dispersing ability.

Examples of the condensed ring compound include anthracene, an anthracene derivative, phenanthrene, a phenanthrene derivative, triphenylene, a triphenylene derivative, pyrene, a pyrene derivative, tetracene, a tetracene derivative, picene, a picene derivative, perylene, a perylene derivative, pentaphene, a pentaphene derivative, pentacene, a pentacene derivative, hexaphene, and a hexaphene derivative. Among them, pyrene, a pyrene derivative, perylene, or a perylene derivative is preferable. Here, the derivative means that a substituent group is contained therein, and for example, the anthracene derivative means including anthracene having a substituent group, and the same applies to other derivatives.

When the condensed ring compound has a substituent group, at least one or more hydrogen atoms among hydrogen atoms constituting the condensed ring compound are substituted with a substituent group. Examples of the substituent group include an organic group having 1 to 10 carbon atoms.

From the viewpoint of enhancing the fluidity of the fluorescent silicone compound (B) in the present invention, the condensed ring compound preferably has no substituent group. Thus, B is particularly preferably pyrene or perylene.

In the condensed ring compound, any one of the carbon atoms constituting the condensed ring should be bonded to the above A.

For example, the non-condensed ring compound has a structure in which a plurality of aromatic rings is linked via a single bond, and examples thereof include a terphenyl substituent. Also, in the non-condensed ring compound, a carbon atom constituting the aromatic ring may be bonded to the above A.

That is, "B" in A-B preferably has a group in which three or more and six or less aromatic six-membered rings condensed with each other or linked via a single bond, and conjugated with each other are arranged, and typically has a group in which three or more and six or less conjugated aromatic six-membered rings are arranged.

In the present invention, those described above can be utilized as B without particular limitation, and suitable structures of B are shown below.

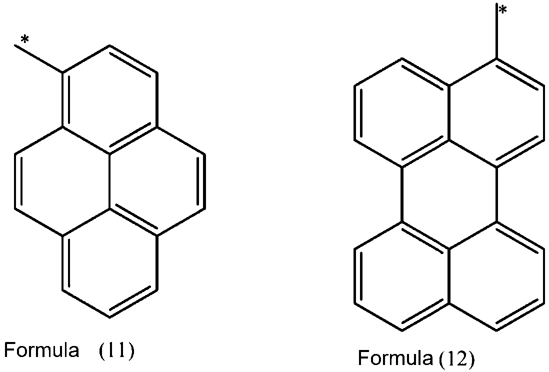

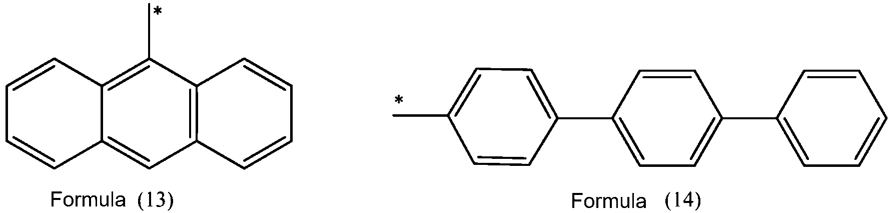

In the above formula (11) to formula (14), each of marks of * is a bond bonded to A.

Among the above formula (11) to formula (14), any one of the compounds represented by the formula (11) to formula (13) which are condensed ring compounds is preferable, pyrene of the formula (11) or perylene of the formula (12) is more preferable, and perylene of the formula (12) is still more preferable.

In the formula (1), at least one R₁ is the above group represented by A-B, and each remaining R₁ is a hydrocarbon group having 1 to 4 carbon atoms or a hydrogen atom. In the formula (1), among a plurality of R₁, the number of groups represented by A-B is preferably 1 or more and 5 or less, more preferably 1 or 2, and each remaining R₁ is preferably a monovalent hydrocarbon group having 1 to 4 carbon atoms. When a plurality of groups represented by A-B is present, the plurality of groups represented by A-B may be the same or different from one another.

Examples of the monovalent hydrocarbon group having 1 to 4 carbon atoms include alkyl groups such as a methyl group, an ethyl group, a propyl group, and a butyl group, and above all, a methyl group is preferable. The alkyl group is preferably linear, but may be branched. When a plurality of monovalent hydrocarbon groups having 1 to 4 carbon atoms is present, the plurality of monovalent hydrocarbon groups having 1 to 4 carbon atoms may be the same or different from one another.

In the formula (1), the letter of n means the number of repetitions, and the letter of n is an integer of 1 or more. The letter of n is not particularly limited, as long as it is an integer of 1 or more, and from the viewpoint of making the fluidity favorable, the letter of n is preferably 500 or less, more preferably 300 or less, and still more preferably 250 or less, and preferably 20 or more, more preferably 100 or more, and still more preferably 200 or more.

The fluorescent silicone compound having a structure represented by the formula (1) may have a group represented by A-B at one end, at both ends, at a side chain, at one end and a side chain, or at both ends and a side chain. Above all, the fluorescent silicone compound having a structure represented by the formula (1) preferably has a group represented by A-B at one end.

### <Fluorescent silicone compound represented by formula (2)>

The fluorescent silicone compound according to one embodiment of the present invention preferably has a structure represented by the following formula (2). The fluorescent silicone compound has a group represented by A-B at one end: 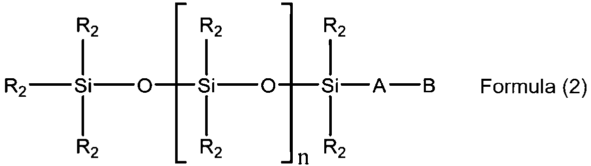 wherein R₂ is a monovalent hydrocarbon group having 1 to 4 carbon atoms or a hydrogen atom, A, B, and the letter of n have the same meanings as those in the formula (1), and at least one R₂ among a plurality of R₂ is a hydrocarbon group.

In the formula (2), R₂ is preferably a monovalent hydrocarbon group having 1 to 4 carbon atoms. Examples thereof include alkyl groups such as a methyl group, an ethyl group, a propyl group, and a butyl group, and above all, a methyl group is preferable. The alkyl group is preferably linear, but may be branched. A plurality of R₂ may be the same or different from one another. In the formula (2), A, B, and the letter of n have the same meanings as those in the formula (1) and as described above.

The fluorescent silicone compound represented by the formula (2) has a group represented by A-B at one end and easily enhances the dispersing ability of the inorganic filler (A), which is preferable.

### <Fluorescent silicone compound represented by formula (3)>

The fluorescent silicone compound according to one embodiment of the present invention preferably has a structure represented by the following formula (3). The fluorescent silicone compound has a group represented by A-B at both ends: 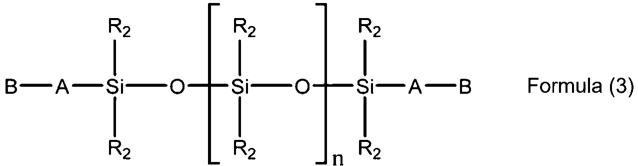 wherein R₂ is a monovalent hydrocarbon group having 1 to 4 carbon atoms or a hydrogen atom, A, B, and the letter of n have the same meanings as those in the formula (1), and at least one R₂ among a plurality of R₂ is a hydrocarbon group.

R₂ in the formula (3) has the same meaning as R₂ in the formula (2), and A, B, and the letter of n have the same meanings as those in the formula (1).

### <Fluorescent silicone compound represented by formula (4)>

The fluorescent silicone compound according to one embodiment of the present invention preferably has a structure represented by the following formula (4). The fluorescent silicone compound has a group represented by A-B at a side chain: 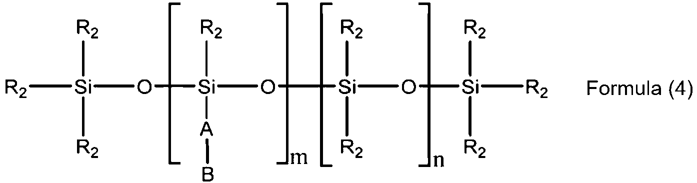 wherein R₂ is a monovalent hydrocarbon group having 1 to 4 carbon atoms or a hydrogen atom, the letter of m is an integer of 1 or more and 10 or less, A, B, and the letter of n have the same meanings as those in the formula (1), and at least one R₂ among a plurality of R₂ is a hydrocarbon group.

R₂ in the formula (4) has the same meaning as R₂ in the formula (2), and A, B, and the letter of n have the same meanings as those in the formula (1).

In the formula (4), the letter of m is an integer of 1 or more and 10 or less, preferably an integer of 1 or more and 5 or less, and more preferably 1 or 2. The letter of m within such a range is preferable because the fluidity can be enhanced while enhancing the adsorptivity with the inorganic filler (A).

The fluorescent silicone compound represented by the formula (4) may be a random polymer or a block polymer. More specifically, the unit indicated in the parenthesis with the letter of m and the unit indicated in the parenthesis with the letter of n may be present in the molecule like a block polymer or a random polymer.

Among those described above, the fluorescent silicone compound (B) used in the present invention preferably has a structure represented by the above formula (2) or (3), and more preferably has a structure represented by the above formula (2).

In the formula (1), each remaining R₁ other than the group represented by A-B is a hydrocarbon group having 1 to 4 carbon atoms or a hydrogen atom, all of them are preferably hydrocarbon groups having 1 to 4 carbon atoms, and all of them are more preferably alkyl groups.

Also, in the formulas (2) to (4), R₂ is a hydrocarbon group having 1 to 4 carbon atoms or a hydrogen atom, all of them are preferably hydrocarbon groups having 1 to 4 carbon atoms, and all of them are more preferably alkyl groups.

However, some remaining R₁ other than the group represented by A-B may be alkenyl groups or hydrogen atoms. Also, some R₂ may be alkenyl groups or hydrogen atoms. Examples of the alkenyl group include a vinyl group, an allyl group, a propenyl group, an isopropenyl group, and a butenyl group, and a vinyl group is preferable.

When R₁ or R₂ is a hydrogen atom, R₁ or R₂ constitutes a hydrosilyl group. When the organopolysiloxane (B) has an alkenyl group or a hydrosilyl group, the organopolysiloxane (B) can be reacted with an addition reaction silicone and prevents oil bleeding from a cured product of the silicone composition from occurring. In addition, compression set can be reduced and further, tensile elongation at break and tensile breaking strength can be increased.

When some remaining R₁ are alkenyl groups or hydrogen atoms, the others of remaining R₁ are preferably alkyl groups.

Also, when some R₂ are alkenyl groups or hydrogen atoms, the others of R₂ are preferably alkyl groups.

When some R₁ or some R₂ are hydrogen atoms, the number of hydrogen atoms in each of the formulas (1) to (4) may be 1 or 2 or more, preferably 1 to 10, more preferably 1 to 5, and most preferably 2.

Also, when some R₁ or some R₂ are alkenyl groups, the number of alkenyl groups in each of the formulas (1) to (4) may be 1 or 2 or more, preferably 1 to 10, more preferably 1 to 5, and most preferably 2.

For example, when the polyorganosiloxane (B) has a group represented by A-B at one end, it is preferable to have an alkenyl group or a hydrosilyl group at another end.

The fluorescent silicone compound (B) may be a compound other than the fluorescent silicone compounds represented by the formulas (1) to (4), as long as the intensity ratio (IE/IF) falls within the predetermined range. For example, in the fluorescent silicone compounds represented by the formulas (1) to (4), the side chain or the end is either a group represented by A-B or a monovalent hydrocarbon group having 1 to 4 carbon atoms; however, a group other than the group represented by A-B and the monovalent hydrocarbon group having 1 to 4 carbon atoms may be provided at the side chain or the end, as long as the self-aggregation can be prevented and an increase in the intensity ratio (IE/IF) can be suppressed.

### <Method for producing fluorescent silicone compounds represented by formulas (1) to (4)>

The method for producing the above fluorescent silicone compounds (B) represented by the formulas (1) to (4) is not particularly limited, and the fluorescent silicone compounds (B) can be obtained by reacting a generally available polyorganosiloxane having a functional group with a compound having three or more and six or less conjugated aromatic six-membered rings and having a functional group capable of reacting with the functional group contained in the polyorganosiloxane. As an example, the fluorescent silicone compound can be produced by utilizing an acetalization reaction of aldehyde with diol, a hydrosilylation reaction of a hydrosilyl group with a carbon-carbon unsaturated bond, or the like.

For example, the fluorescent silicone compound (B) in the present invention can be produced by a reaction of a polyorganosiloxane having a diol structure with a compound having an aldehyde group and three or more and six or less conjugated aromatic six-membered rings. As another method, the fluorescent silicone compound (B) in the present invention can be produced by a reaction of a polyorganosiloxane having a hydrosilyl group at an end and/or a side chain with a compound that has a group having a carbon-carbon unsaturated bond such as an acryloyl group or a methacryloyl group and three or more and six or less conjugated aromatic six-membered rings.

The silicone composition may appropriately contain a by-product produced in the production process of the fluorescent silicone compound (B). For example, as described above, the fluorescent silicone compound (B) uses a polyorganosiloxane having a functional group as the raw material in its production process in some cases, and examples of the by-product thereof include a condensate of a polyorganosiloxane produced through a condensation reaction of the functional groups of the polyorganosiloxane having a functional group such as a hydroxyl group.

Examples thereof also include a by-product obtained by reacting a side reaction product obtained through the dimerization or oxidation of a compound having three or more and six or less conjugated aromatic six-membered rings in the process of synthesizing a polyorganosiloxane having a functional group with a compound having three or more and six or less conjugated aromatic six-membered rings, further with a polyorganosiloxane having a functional group or a side reaction product thereof. Examples thereof also include a by-product obtained by reacting a side reaction product obtained by the side reaction of a polyorganosiloxane having a functional group with a compound having three or more and six or less conjugated aromatic six-membered rings. As described above, in the fluorescent silicone compound (B), it is preferable that "B" in A-B typically have a group in which three or more and six or less aromatic six-membered rings conjugated with each other are arranged and "A" be divalent. Instead, the above by-product may have two or more groups in which three or more and six or less aromatic six-membered rings conjugated with each other are arranged and a trivalent group as A. For example, in the case of Synthetic Example 2 mentioned later, a compound having the following structure may be contained as a by-product. The by-product is preferably contained in a range not inhibiting the effect of the present invention, and is, for example, preferably contained in the resin composition in an amount of, for example, about 30 parts by mass or less, preferably 20 parts by mass or less, and still more preferably 10 parts by mass or less per 100 parts by mass of the fluorescent silicone compound (B). The by-product can be said to be a fluorescent silicone compound (B), as long as it is a silicone compound having fluorescent properties.

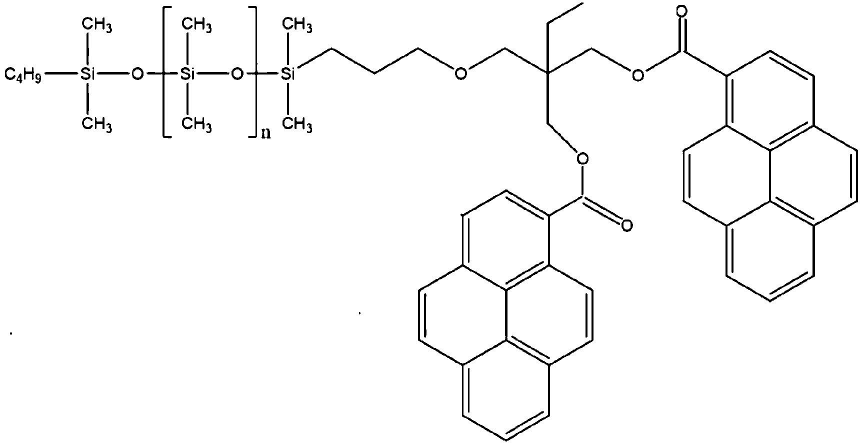

The content of the fluorescent silicone compound (B) in the silicone composition of the present invention is preferably 5% by mass or more, more preferably 7% by mass or more, and still more preferably 8% by mass or more based on the total amount of the fluorescent silicone compound (B) and the silicone resin (C) (hereinafter, also referred to as "resin components"). When the content of the fluorescent silicone compound (B) is the above lower limit value or more, the inorganic filler (A) is suitably dispersed in the silicone composition. From the viewpoint of suppressing the self-aggregation and thereby making it easy to impart an excellent flexibility to the silicone composition, the fluorescent silicone compound (B) is preferably 40% by mass or less, more preferably 20% by mass or less, and still more preferably 12% by mass or less based on the total amount of the resin components.

The above fluorescent silicone compound (B) may be used singly, or two or more thereof may be used in combination.

The molecular weight of the fluorescent silicone compound (B) in the present invention is preferably 1000 or more, more preferably 2000 or more, and still more preferably 3000 or more. When the molecular weight of the fluorescent silicone compound (B) is the above lower limit value or more, the self-aggregation of the fluorescent silicone compound (B) is suppressed and an excellent flexibility is easily imparted to the silicone composition. From the viewpoint of making the adsorptivity with the inorganic filler (A) a certain value or more and making it easy to suitably disperse the inorganic filler (A) into the silicone composition, the molecular weight of the fluorescent silicone compound (B) is preferably 16000 or less, more preferably 15800 or less, and still more preferably 15500 or less. The molecular weight means the number-average molecular weight. The number-average molecular weight is a value measured by gel permeation chromatography (GPC) in terms of polystyrene.

In the silicone composition of the present invention, the amount of aromatic units of the fluorescent silicone compound (B) to the total specific surface area of the inorganic filler (A) is preferably 0.0005 mmol/m² or more, more preferably 0.0006 mmol/m² or more, and still more preferably 0.0007 mmol/m² or more. When the above ratio is the above lower limit value or more, the inorganic filler (A) and the fluorescent silicone compound (B) are suitably adsorbed and the inorganic filler (A) is easily dispersed into the silicone composition. From the viewpoint of suppressing the self-aggregation of the fluorescent silicone compound (B) and thereby making it easy to impart an excellent flexibility to the silicone composition without excessively containing the fluorescent silicone compound (B), the above ratio is preferably 0.01 mmol/m² or less, more preferably 0.008 mmol/m² or less, and still more preferably 0.006 mmol/m² or less.

The amount of aromatic units means the amount of the conjugated aromatic structure having three or more and six or less conjugated aromatic six-membered rings, and specifically refers to the number of units represented by "B" in the above formula (1).

### (Silicone resin (C))

The silicone composition of the present invention contains a silicone resin (C). The silicone resin (C) is a silicone resin other than the fluorescent silicone compound (B) described above. The silicone resin (C) is preferably a matrix resin in the silicone composition, and the inorganic filler (A) is preferably dispersed in the silicone resin (C) and held in the silicone resin (C).

The silicone resin (C) is typically a compound having no conjugated aromatic structure having three or more and six or less conjugated aromatic six-membered rings. The conjugated aromatic structure having three or more and six or less conjugated aromatic six-membered rings as used herein has the same meaning as "B" described in the formula (1).

Examples of the silicone resin (C) include a curable silicone resin. The curable silicone resin may be any of a condensation-curable silicone resin and an addition reaction-curable silicone resin, and an addition reaction-curable silicone resin is preferable.

The silicone resin (C) may be branched, may have a linear structure, and specific examples thereof include an organopolysiloxane having an addition reactive group. The addition reactive group means a functional group that reacts by an addition reaction, and representative examples thereof include an alkenyl group, a methacryloyl group, an acryloyl group, and a hydrosilyl group. The organopolysiloxane having an addition reactive group is preferably used as an addition reaction-curable silicone resin.

Preferred examples of the organopolysiloxane having an addition reactive group include an organopolysiloxane having an alkenyl group and an organopolysiloxane having a hydrosilyl group.

The organopolysiloxane having an alkenyl group is an addition reaction-curable silicone resin that is cured by being combined with an organopolysiloxane having a hydrosilyl group. The organopolysiloxane having an alkenyl group preferably has one or two or more alkenyl groups, and preferably two or more alkenyl groups in the molecule.

In the organopolysiloxane, the alkenyl group may be contained at any of the end or the middle of the molecular chain of the polysiloxane structure, or at both the end and the middle, and is preferably contained at at least an end, and still more preferably contained at both ends of the molecular chain composed of the polysiloxane structure.

Examples of the alkenyl group include, but is not particularly limited to, those having 2 to 8 carbon atoms such as a vinyl group, an allyl group, a butenyl group, a pentenyl group, a hexenyl group, a heptenyl group, and an octenyl group, and among them, a vinyl group is preferable from the viewpoint of the ease of synthesis, the reactivity, and the like. The alkenyl group is preferably an alkenyl group directly bonded to a silicon atom.

In the organopolysiloxane having an alkenyl group, examples of the remaining groups each bonded to a silicon atom other than the alkenyl group include alkyl groups having about 1 to 18 carbon atoms such as a methyl group, an ethyl group, a propyl group, a butyl group, a hexyl group, and a dodecyl group; aryl groups having about 6 to 12 carbon atoms such as a phenyl group; and aralkyl groups having about 7 to 18 carbon atoms such as a 2-phenylethyl group and a 2-phenylpropyl group, and further, specific examples thereof include substituted hydrocarbon groups such as a chloromethyl group and a 3,3,3-trifluoropropyl group.

Among them, a methyl group is preferable from the viewpoint of the ease of synthesis and the like. Among the remaining groups each bonded to a silicon atom, 80 mol% or more thereof are preferably methyl groups, 90 mol% or more are more preferably methyl groups, and 100 mol% are still more preferably methyl groups. The organopolysiloxane having an alkenyl group typically has no hydrogen atom as the remaining group bonded to a silicon atom, that is, the component (C) preferably contains no hydrosilyl group.

Specific examples of the organopolysiloxane having an alkenyl group include organopolysiloxanes having vinyl groups at both ends such as polydimethylsiloxane having vinyl groups at both ends, polyphenylmethylsiloxane having vinyl groups at both ends, a dimethylsiloxane-diphenylsiloxane copolymer having vinyl groups at both ends, a dimethylsiloxane-phenylmethylsiloxane copolymer having vinyl groups at both ends, and a dimethylsiloxane-diethylsiloxane copolymer having vinyl groups at both ends.

The organopolysiloxane having a hydrosilyl group is an addition reaction-curable silicone resin that is cured by being combined with an organopolysiloxane having an alkenyl group described above. The organopolysiloxane having a hydrosilyl group preferably has one or two or more hydrosilyl groups in its molecule. The hydrosilyl group may be contained at any of the end of the molecular chain or the middle of the molecular chain of the polysiloxane structure, and is preferably contained at an end, and more preferably contained at both ends of the molecular chain of the polysiloxane structure.

In the organopolysiloxane having a hydrosilyl group, specific examples of the remaining groups each bonded to a silicon atom other than the hydrosilyl group are as described in the organopolysiloxane having an alkenyl group, the description thereof is omitted. The remaining groups are preferably methyl groups, and the preferred proportion thereof is as described in the organopolysiloxane having an alkenyl group. The organopolysiloxane having a hydrosilyl group typically has no alkenyl group.

Examples of the organopolysiloxane having a hydrosilyl group include a methylhydrosiloxane-dimethylsiloxane copolymer, polymethylhydrosiloxane, polyethylhydrosiloxane, and a methylhydrosiloxane-phenylmethylsiloxane copolymer. These may contain or may not contain a hydrosilyl group at an end.

The organopolysiloxane may be an organopolysiloxane having no addition reactive group, and examples thereof include silicone oil. Examples of the silicone oil include straight silicone oil such as phenylmethylsilicone oil such as dimethylsilicone oil (polydimethylsiloxane), polyphenylmethylsiloxane, a dimethylsiloxane-diphenylsiloxane copolymer, and dimethylsiloxane-phenylmethylsiloxane, and non-reactive modified silicone oil in which a non-reactive organic group is introduced into the main chain having a polysiloxane structure, a side chain bonded to the main chain, or an end of the main chain. The non-reactive organic group is an organic group having no addition reactive group. Examples of the non-reactive modified silicone oil include polyether-modified silicone oil, aralkyl-modified silicone oil, fluoroalkyl-modified silicone oil, long-chain alkyl-modified silicone oil, higher fatty acid ester-modified silicone oil, higher fatty acid amide-modified silicone oil, and phenyl-modified silicone oil. Among the above, silicone oil is preferably straight silicone oil, and among straight silicone oil, dimethylsilicone oil is more preferable.

The organopolysiloxane may be other than the above, and may be an organopolysiloxane having an alkoxy group, an organopolysiloxane having a silanol group, and the like.

As the silicone resin (C), an organopolysiloxane of those described above may be used singly, or two or more thereof may be used in combination.

The silicone resin (C) preferably has a number-average molecular weight of 1000 or more and 50000 or less. When the number-average molecular weight falls within the above range, the silicone composition can maintain a certain shape after coating or after working, while making the coatability and workability of the silicone composition favorable, so that a heat radiation material can be easily formed using the silicone composition. In addition, it is easy to suitably disperse the inorganic filler (A), formulate a large amount of the inorganic filler (A), and enhance the thermal conductivity, while ensuring the flexibility of the silicone composition. The number-average molecular weight is more preferably 3000 or more and 40000 or less, and still more preferably 5000 or more and 30000 or less.

The number-average molecular weight is a value measured by gel permeation chromatography (GPC) in terms of polystyrene.

The silicone resin (C) is preferably liquid at an ambient temperature (25°C) and an ordinary pressure (1 atmosphere). When the silicone resin (C) is a liquid, the coatability and workability of the silicone composition are easily made favorable. In addition, it is easy to suitably disperse the inorganic filler (A) and formulate a large amount of the inorganic filler (A), while ensuring the flexibility of the silicone composition.

The silicone composition may be curable or non-curable. The curable composition may be one-part curable or two-part curable. In the case of the one-part curable composition, a silicone resin serving as a base resin and a silicone resin serving as a curing agent may be contained as the silicone resin (C), and more specifically, an organopolysiloxane having an alkenyl group and an organopolysiloxane having a hydrosilyl group are preferably contained.

In the case of the two-part curable composition, the silicone composition may constitute any one part of two parts. Therefore, the silicone composition may contain a silicone resin serving as a base resin or a silicone resin serving as a curing agent. More specifically, the silicone composition preferably contains an organopolysiloxane having an alkenyl group or an organopolysiloxane having a hydrosilyl group.

However, also in the case of the two-part curable composition, the silicone resin may contain an organopolysiloxane having a hydrosilyl group or an organopolysiloxane having an alkenyl group in addition to the organopolysiloxane having an alkenyl group or the organopolysiloxane having a hydrosilyl group, unless curing proceeds.

In the case of the two-part curable composition, a mixture of the first part and the second part may form the silicone composition of the present invention.

In the case of the two-part curable composition, for example, both the first part and the second part are formed of a silicone composition containing the inorganic filler (A), the fluorescent silicone compound (B), and the silicone resin (C). Then, it is preferable that the first part contain an organopolysiloxane having an alkenyl group and the second part contain an organopolysiloxane having a hydrosilyl group.

The curable silicone composition may contain the non-reactive organopolysiloxane described above as the silicone resin (C), and may contain, for example, an organopolysiloxane having no addition reactive group in addition to the organopolysiloxane having an alkenyl group or the organopolysiloxane having a hydrosilyl group described above.

The silicone composition may be a non-curable silicone composition, and in such a case, for example, a silicone oil may be used as the silicone resin (C).

Some silicone resins (C) may be by-products produced in the process of producing the fluorescent silicone compound (B) described above. When the silicone resin (C) includes a by-product produced in the process of producing the fluorescent silicone compound (B), a component other than the by-product is preferably further included.

The total content (filling rate) of the fluorescent silicone compound (B) and the silicone resin (C) in the silicone composition of the present invention is preferably 1% by volume or more and 85% by volume or less, more preferably 4% by volume or more and 83% by volume or less, and still more preferably 7% by volume or more and 78% by volume or less based on the total amount of the silicone composition. When the total content is the above lower limit value or more, it is easy to suitably disperse the inorganic filler (A) into the fluorescent silicone compound (B) and the silicone resin (C). When the above total content is the above upper limit value or less, a certain amount or more of the inorganic filler (A) is easily formulated.

### (Additive)

The silicone composition of the present invention may contain an additive other than the inorganic filler (A), fluorescent silicone compound (B), and silicone resin (C) described above in a range not inhibiting the effect of the present invention as necessary. Examples of the additive include at least one or more selected from an adhesive, a fire retardant, an antioxidant, a colorant, and an anti-settling agent. When an addition reaction silicone is contained as described above, a curing catalyst or the like may be formulated to promote curing of the addition reaction silicone. Examples of the curing catalyst include a platinum catalyst.

### [Method for producing silicone composition]

The silicone composition of the present invention is preferably prepared by mixing the inorganic filler (A), the fluorescent silicone compound (B), the silicone resin (C), and further, an additive to be formulated as necessary, and the like. The method for mixing these components is not particularly limited, and for example, the silicone composition is prepared by adding the inorganic filler (A), the fluorescent silicone compound (B), and further, an additive to be formulated as necessary, and the like to the silicone resin (C), and then, for example, the silicone composition may be prepared by stirring or kneading these components.

The inorganic filler (A) may be surface-treated with the fluorescent silicone compound (B) and then mixed with the silicone resin (C). When the inorganic filler (A) is surface-treated with the fluorescent silicone compound (B) in advance, the inorganic filler (A) is surface modified with the fluorescent silicone compound (B) in advance. Then, the silicone composition is preferably prepared by mixing the inorganic filler (A) surface-treated in advance, in the silicone resin (C).

The method for carrying out surface treatment using the fluorescent silicone compound (B) in advance is not particularly limited and may be carried out by a known method, and for example, a wet treatment method or a dry treatment method can be used. Among them, the wet treatment method is preferable. In the wet treatment method, for example, it is preferable that the inorganic filler (A) be added to a treatment liquid obtained by dispersing or dissolving the fluorescent silicone compound (B) in a solvent, and thereafter, the mixture be dried, subjected to heat treatment, washed, and the like to bond or attach the fluorescent silicone compound (B) to the surface of the inorganic filler (A).

The dry treatment method is a method for carrying out surface treatment without using a solvent, and is specifically a method in which the fluorescent silicone compound (B) is mixed with the inorganic filler (A), the mixture is stirred with a mixer or the like, and thereafter, subjected to heat treatment to bond or attach the fluorescent silicone compound (B) to the surface of the inorganic filler (A).

### [Physical properties and applications of silicone composition]

The silicone composition of the present invention preferably has a piercing load of 30 mN or less, more preferably 20 mN or less, and still more preferably 10 mN or less. By reducing the piercing load as described above, the silicone composition can be said to be flexible. The lower limit of the piercing load is not particularly limited, and for example, may be 1 mN or more, and 2 mN or more. The piercing load is measured by the method described in Examples mentioned later.

Since the silicone composition of the present invention is excellent in the thermal conductivity and flexibility as described above, it can be suitably used for heat radiation materials such as silicone grease for heat radiation and a heat radiation silicone sheet. The silicone composition according to the present invention is preferably used in electronic devices for heat radiation of various electronic components. Specifically, the silicone composition according to the present invention can effectively radiate heat generated from an electronic component such as a semiconductor device by being arranged, for example, between the electronic component and a heat sink in a cured state, as necessary.

### Examples

Hereinafter, the present invention will be demonstrated by way of specific Examples and Comparative Examples of the present invention. The present invention is not limited to examples below.

The silicone compositions and cured products thereof in Examples and Comparative Examples were evaluated by the following methods.

### [Molecular weight]

The number-average molecular weight of the fluorescent silicone compound (B) was measured under the following conditions.

Measurement was carried out using "APC system" manufactured by Waters as the measurement apparatus, HSPgel HR MB-M 6.0 × 150 mm as a column, and THF as solvent liquid under a flow rate of 0.5 mL/min at a temperature of 40°C.

### [Fluorescence spectrum]

For the silicone compositions obtained in Examples and Comparative Examples, the fluorescence intensity at the maximum wavelength of fluorescence of the non-associated form (IF) and the excimer emission intensity at the maximum wavelength of excimer emission (IE) were measured. Specifically, the excimer emission intensity at the maximum wavelength of excimer emission (IE) and the fluorescence intensity at the maximum wavelength of fluorescence of the non-associated form (IF) were measured using "Fluorescence Spectrophotometer F-2700" manufactured by Hitachi High-Tech Corporation at an excitation wavelength of 339 nm (when B is pyrene) or 420 nm (when B is perylene), and the intensity ratio (IE/IF) of the excimer emission intensity at the maximum wavelength of excimer emission (IE) to the fluorescence intensity at the maximum wavelength of fluorescence of the non-associated form (IF) was calculated. In the above measurement of IE and IF, each of the silicone compositions obtained in Examples and Comparative Examples was sandwiched between two glass plates so as to have a thickness of about 50 to 60 µm and used as the measurement sample. The measurement sample was installed at an angle of 30 degrees to the light source of the fluorescence spectrophotometer, and the slit width on the side of excitation and fluorescence was set to 5 nm.

The wavelength at which the maximum peak of fluorescence of the non-associated form was confirmed and the wavelength at which the maximum peak of excimer emission was confirmed were also measured by the above measurement method.

When the structure of the fluorescent silicone compound (B) is unknown, the fluorescence spectrum is measured by determining the wavelength at which IF is the maximum as the excitation wavelength.

### [Piercing load]

The flexibility of the silicone composition was evaluated by the piercing load measured by the following method. The lower the piercing load, the higher the flexibility of the silicone composition.

The silicone composition was defoamed, and 30 g of the defoamed silicone composition was introduced into a cylindrical container having a diameter of 25 mm. Then, a piercing rod (rod diameter: 1.8 mm) having a disk-shaped member having a diameter of 2 mm and a thickness of 1 mm at the tip was pressed onto the silicone composition introduced into the container from the tip side of the piercing rod at a rate (piercing rate) of 10 mm/minute, and the load (mN) when the tip of the piercing rod reached a depth of 2 mm from the liquid surface was measured. Evaluation was carried out under the following evaluation criteria based on the measured load. The material of the piercing rod was stainless. The measurement was carried out at 25°C, and the measurement of the load was carried out using "ZTS-5N" manufactured by IMADA.

### (Evaluation criteria)

AA: less than 10 mN
A: 10 mN or more and less than 20 mN
B: 20 mN or more and less than 30 mN
C: 30 mN or more

### [Raw material used]

Respective raw materials used in Examples and Comparative Examples are as follows.

### (inorganic filler (A))

Graphite: scaly graphite
Alumina
Boron nitride: hexagonal boron nitride (h-BN), boron nitride particles

### (Fluorescent silicone compound (B))

As the fluorescent silicone compound (B) in the present Examples and Comparative Examples, those synthesized in Synthetic Examples 1 to 3 and Comparative Synthetic Examples 1 to 5 below were used.

### <Synthetic Example 1>

98.6 g of an organosiloxane compound (n = 210) having a 1,3-diol group represented by the formula (15), 1.7 g of 3-perylenecarboxy aldehyde as the monomer, 50 g of toluene as the solvent, and further, 0.6 g of a catalyst ("Amberlyst 15 dry" manufactured by ORGANO CORPORATION) were reacted in a nitrogen atmosphere at 100°C for 24 hours. After the reaction, the reaction mixture was filtered through a 5.0 µm PTFE filter to remove the catalyst, and the filtrate was concentrated using a rotary evaporator and a vacuum dryer to obtain the fluorescent silicone compound (silicone 1) of Synthetic Example 1. The reaction formula is as follows. The following reaction was confirmed to be proceeded by ¹H NMR measurement. Measurement was carried out using "ECX-400" manufactured by JEOL as an NMR measurement apparatus and a heavy chloroform as a solvent under the conditions of a sample concentration of 1% by mass, 25°C, a measurement frequency of 400 MHz, and a cumulative number of 8. The progress of the reaction was also confirmed by ¹H NMR measurement for other Synthetic Examples and Comparative Synthetic Examples.

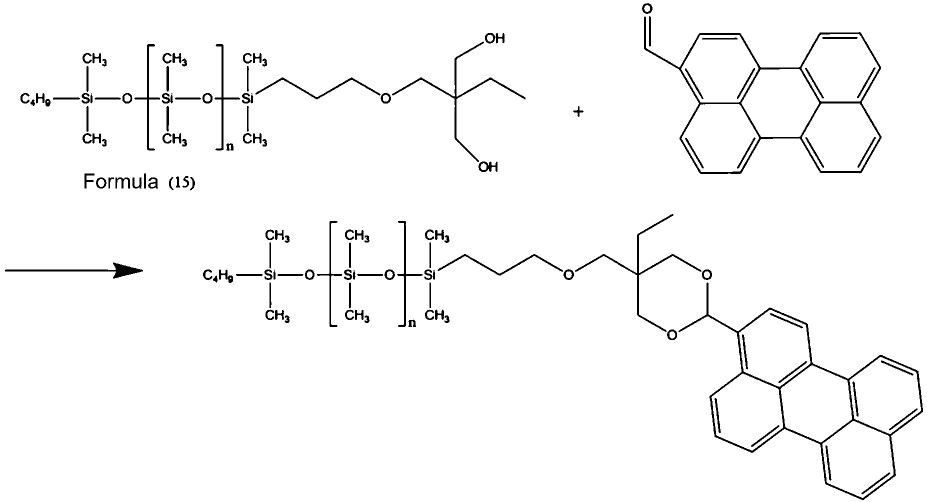

### <Synthetic Example 2>

The fluorescent silicone compound (silicone 2) of Synthetic Example 2 was obtained in the same manner as in Synthetic Example 1, except that the monomer was changed to 1.4 g of 1-pyrenecarboxyaldehyde. The reaction formula is as follows.

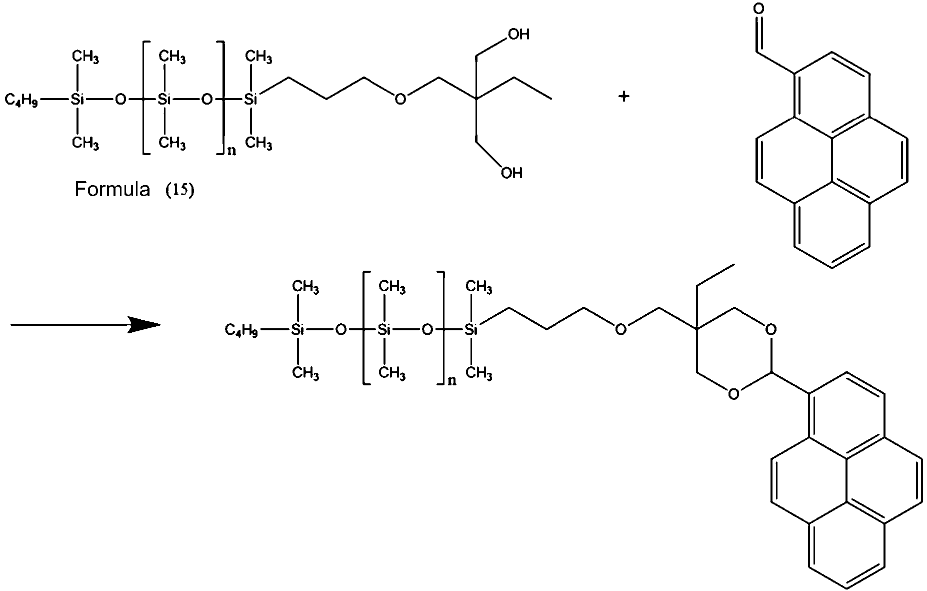

### <Synthetic Example 3>

98.6 g of the organosiloxane compound (n = 70) having a hydrosilyl group represented by the formula (16), 5.5 g of (1-pyrene)methylmethacrylate as the monomer, 50 g of toluene as the solvent, and further, 0.01 g of a Karstedt catalyst (platinum catalyst) as the catalyst were reacted in a nitrogen atmosphere at 100°C for 24 hours. Then, the reaction liquid was concentrated with a rotary evaporator and a vacuum dryer to obtain the fluorescent silicone compound (silicone 3)of Synthetic Example 3. The reaction formula is as follows.

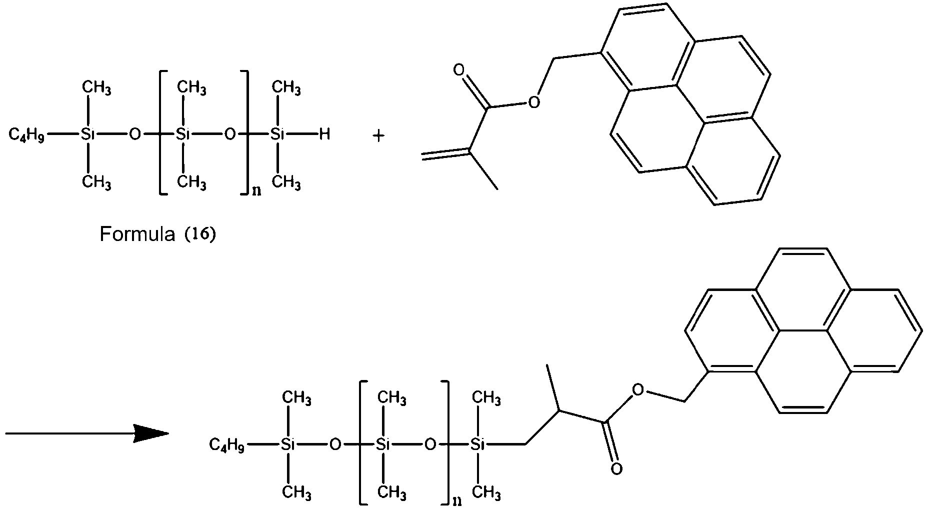

### <Comparative Synthetic Example 1>

40.0 g of an organosiloxane compound (n = 70) having a hydrosilyl group represented by the formula (19), 2.98 g of (1-pyrene)methylmethacrylate as the monomer, 3.41 g of ethyl methacrylate, 50 g of toluene as the solvent, and further, 0.4 mg of a Karstedt catalyst (platinum catalyst) as the catalyst were reacted in a nitrogen atmosphere at 60°C for 24 hours. The reaction liquid was concentrated with a rotary evaporator and a vacuum dryer to obtain the fluorescent silicone compound (silicone 4) of Comparative Synthetic Example 1. The reaction formula is as follows.

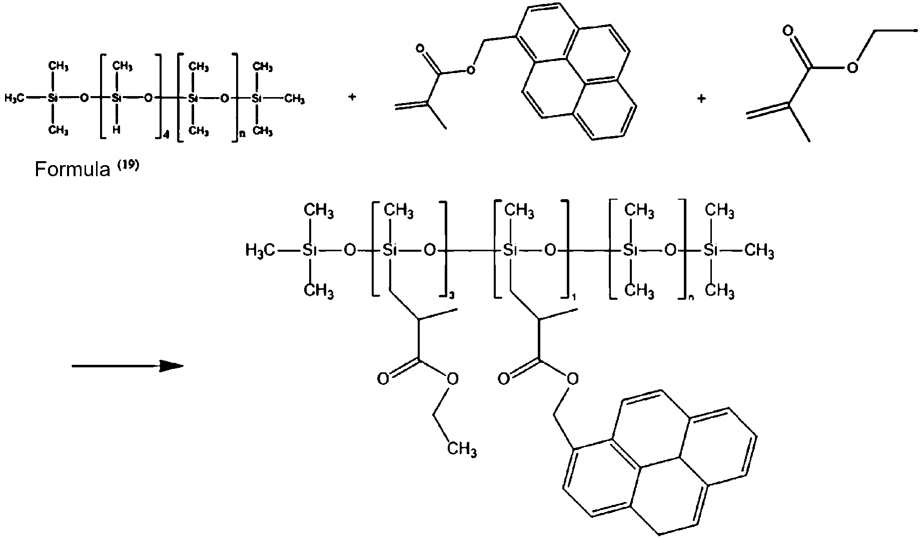

### <Comparative Synthetic Example 2>

The synthesis was carried out in the same manner as in Synthetic Example 3, except that the organosiloxane compound having a hydrosilyl group represented by the formula (16) was changed to the compound of n = 12 and the monomer was changed to 21.1 g of (1-pyrene)methylmethacrylate, thereby obtaining the fluorescent silicone compound (silicone 5) of Comparative Synthetic Example 2. The reaction formula is omitted since it is the same as Synthetic Example 3, except that the compound of the formula (16) was changed to the compound of n = 12.

### <Comparative Synthetic Example 3>

98.6 g of the organosiloxane compound (n = 70) having a hydrosilyl group represented by the formula (19), 22 g of (1-pyrene)methylmethacrylate as the monomer, 50 g of toluene as the solvent, and further, 0.01 g of a Karstedt catalyst (platinum catalyst) as the catalyst were reacted in a nitrogen atmosphere at 100°C for 24 hours. The reaction liquid was concentrated with a rotary evaporator and a vacuum dryer to obtain the fluorescent silicone compound (silicone 6) of Comparative Synthetic Example 3. The reaction formula is as follows.

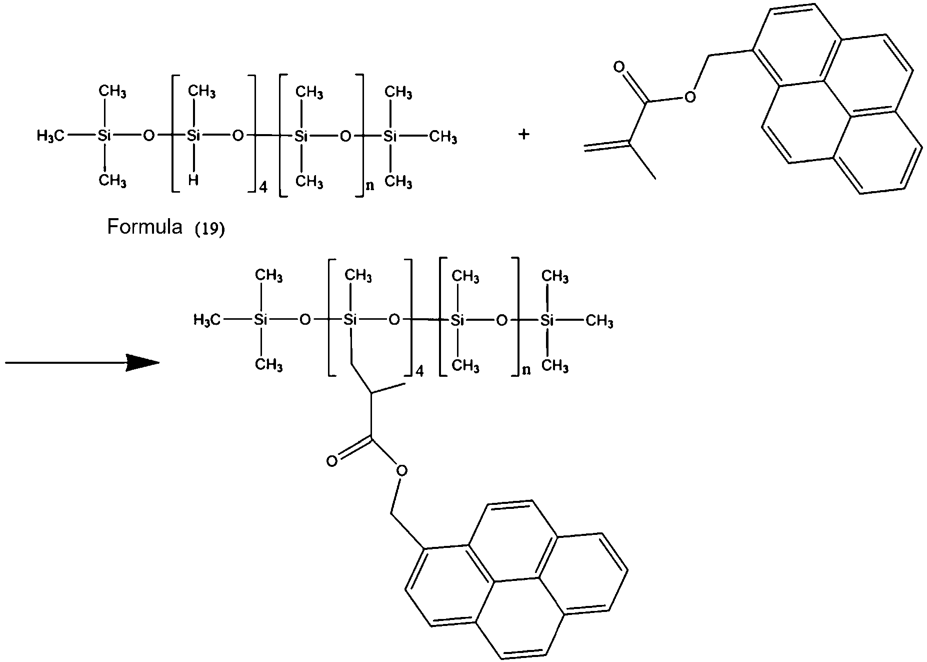

### <Comparative Synthetic Example 4>

The fluorescent silicone compound (silicone 7) of Comparative Synthetic Example 4 was obtained in the same manner as in Synthetic Example 1, except that the organosiloxane compound of the formula (15) was changed to the compound of n = 70 and the amount of 3-perylenecarboxyaldehyde was changed to 5.1 g. The reaction formula is omitted since it is the same as Synthetic Example 1, except that the compound of the formula (15) was changed to the compound of n = 70.

### <Comparative Synthetic Example 5>

11 g of the organosiloxane compound (n = 7) having a hydroxyl group represented by the formula (20), 2.06 g of 1-pyrenebutanoic acid as the monomer, 3.79 g of 2-methyl-6-nitrobenzoic anhydride as the reaction agent, 3.67 g of 4-dimethylaminopyridine, and 30 g of tetrahydrofuran as the solvent were reacted in a nitrogen atmosphere at room temperature for 24 hours. Then, 50 mL of a saturated aqueous sodium bicarbonate solution was added, the mixture was extracted twice with 100 mL of cyclohexane in total, and the combined organic layer was washed with brine. The washed organic layer was concentrated with a rotary evaporator and a vacuum dryer to obtain the fluorescent silicone compound (silicone 8) of Comparative Synthetic Example 5. The reaction formula is as follows.

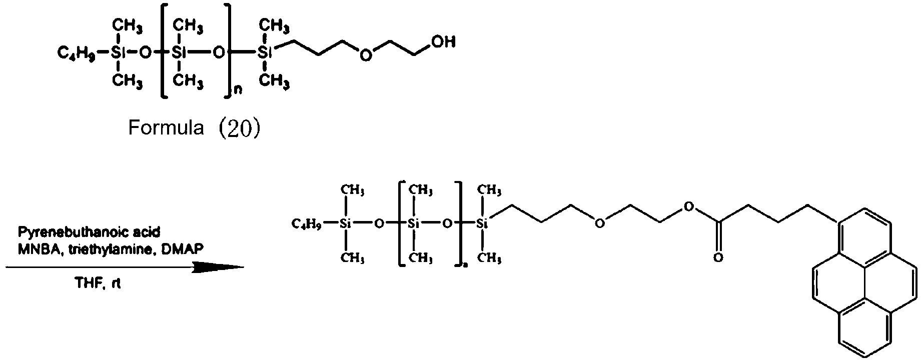

### (Silicone resin (C))

### Organopolysiloxane (number-average molecular weight 25000)

### [Examples 1 to 12, Comparative Examples 1 to 9]

The inorganic filler (A), the fluorescent silicone compound (B), and the silicone resin (C) were mixed according to the formulation described in Table 1 to obtain each silicone composition. For each silicone composition obtained, the fluorescence analysis and the measurement of the piercing load were conducted. Evaluation results are shown in Table 1. However, in Comparative Examples 6 and 7, no fluorescent silicone compound (B) was formulated.

**[Table 1]**

| No. | Inorganic filler (A) | Size of inorganic filler (A) | Specific surface area of inorganic filler (A) (m²/g) | Amount of component (A) formulated (g) | Filling rate of component (A) (% by volume, based on total composition) | Fluorescent silicone compound (B) | Amount of component (B) formulated (g) | Content of component (B) (% by weight, based on total resin component) | Number-average molecular weight of component (B) | Silicone resin (C) | Amount of component (C) formulated (g) | Intensity ratio (I_{E}/I_{F}) | Wavelength at which maximum peak of fluorescence of non-associated form was confirmed (nm) | Wavelength at which maximum peak of excimer emission was confirmed (nm) | Amount of aromatic unit per surface area of filler (mmol/m²) | Piercing load (mN) | Evaluation of piercing load |
|---|---|---|---|---|---|---|---|---|---|---|---|---|---|---|---|---|---|
| Example 1 | Graphite | Average particle size 10µm | 8.55 | 5.13 | 23 | Silicone 1 | 1.132 | 15 | 15300 | Organopolysiloxane | 6.41 | 0.089 | 445 | 550 | 0.00170 | 2 | AA |
| Example 2 | Graphite | Average particle size 10µm | 8.55 | 5.13 | 23 | Silicone 1 | 2.264 | 30 | 15300 | Organopolysiloxane | 5.28 | 0.13 | 445 | 550 | 0.00337 | 2 | AA |
| Example 3 | Graphite | Average particle size 10µm | 8.55 | 5.13 | 23 | Silicone 2 | 0.755 | 10 | 15300 | Organopolysiloxane | 6.99 | 0.26 | 375 | 480 | 0.00113 | 6 | AA |
| Example 4 | Graphite | Average particle size 10µm | 8.55 | 5.13 | 23 | Silicone 2 | 0.528 | 7 | 15300 | Organopolysiloxane | 7.02 | 0.31 | 375 | 480 | 0.00079 | 6 | AA |
| Example 5 | Graphite | Average particle size 10µm | 8.55 | 5.13 | 23 | Silicone 3 | 1.132 | 15 | 4800 | Organopolysiloxane | 6.41 | 0.4 | 375 | 480 | 0.00538 | 9 | AA |
| Example 6 | Graphite | Average particle size 10µm | 8.55 | 5.13 | 23 | Silicone 2 | 2.264 | 30 | 15300 | Organopolysiloxane | 5.28 | 0.59 | 375 | 480 | 0.00337 | 4 | AA |
| Example 7 | Graphite | Average particle size 10µm | 8.55 | 5.13 | 23 | Silicone 1 | 0.528 | 7 | 15300 | Organopolysiloxane | 7.02 | 0.21 | 445 | 550 | 0.00078 | 2 | AA |
| Example 8 | Graphite | Average particle size 10µm | 8.55 | 5.13 | 23 | Silicone 1 | 0.755 | 10 | 15300 | Organopolysiloxane | 6.79 | 0.2 | 445 | 550 | 0.00113 | 2 | AA |
| Example 9 | Graphite | Average particle size 10µm | 8.55 | 5.13 | 23 | Silicone 2 | 1.132 | 15 | 15300 | Organopolysiloxane | 6.41 | 0.31 | 375 | 480 | 0.00169 | 3 | AA |
| Example 10 | Graphite | Average particle size 10µm | 8.55 | 5.13 | 23 | Silicone 3 | 0.755 | 10 | 4800 | Organopolysiloxane | 6.79 | 027 | 375 | 480 | 0.00359 | 6 | AA |
| Example 11 | Alumina | Average particle size 3µm | 0.6 | 23.8 | 23 | Silicone 2 | 0.392 | 10 | 15300 | Organopolysiloxane | 3.53 | 0.41 | 375 | 480 | 0.00179 | 3 | AA |
| Example 12 | Boron nitride | Average particle size 1µm | 32.2 | 5.27 | 23 | Silicone 2 | 0.755 | 30 | 15300 | Organopolysiloxane | 6.79 | 0.41 | 375 | 480 | 0.00087 | 2 | AA |

| No. | Inorganic filler (A) | Size of inorganic filler (A) | Specific surface area of inorganic filler (A) (m2/g) | Amount of component (A) formulated (g) | Filling rate of component (A) (% by volume, based on total composition) | Fluorescent silicone compound (B) | Amount of component (B) formulated (9) | Content of component (B) (% by weight, based on total resin component) | Number-average molecular weight of component (B) | Silicone resin (C) | Amount of component (C) formulated (g) | Intensity ratio (IE/IF) | Wavelength at which maximum peak of fluorescence of non-associated form was confirmed (nm) | Wavelength at which maximum peak of excimer emission was confirmed (nm) | Amount of aromatic unit per surface area of filler (mmol/m2) | Piercing load (mN) | Evaluation of piercing load |
|---|---|---|---|---|---|---|---|---|---|---|---|---|---|---|---|---|---|
| Comparative Example 1 | Graphite | Average particle size 10µm | 8.55 | 5.13 | 23 | Silicone 5 | 0.302 | 4 | 1300 | Organopolysiloxane | 7.24 | 0.67 | 375 | 480 | 0.00531 | 37 | C |
| Comparative Example 2 | Graphite | Average particle size 10µm | 8.55 | 5.13 | 23 | Silicone 3 | 2.264 | 30 | 4800 | Organopolysiloxane | 5.28 | 1.32 | 375 | 480 | 0.01075 | 22 | B |
| Comparative Example 3 | Graphite | Average particle size 10µm | 8.55 | 5.13 | 23 | Silicone 5 | 0.755 | 10 | 1300 | Organopolysiloxane | 6.79 | 2.7 | 375 | 480 | 0.01324 | 76 | C |
| Comparative Example 4 | Graphite | Average particle size 10µm | 8.55 | 5.13 | 23 | Silicone 4 | 0.755 | 10 | 5800 | Organopolysiloxane | 6.79 | 0.7 | 375 | 480 | 0.00297 | 38 | C |
| Comparative Example 5 | Graphite | Average particle size 10µm | 8.55 | 5.13 | 23 | Silicone 6 | 0.755 | 10 | 6200 | Organopolysiloxane | 6.79 | 1.3 | 375 | 480 | 0.01115 | 58 | C |
| Comparative Example 6 | Alumina | Average particle size 3µm | 0.6 | 23.8 | 23 | Without | 0 | 0 | 15300 | Organopolysiloxane | 3.92 | - | - | - | - | 120 | C |
| Comparative Example 7 | Boron nitride | Average particle size 1um | 32.2 | 5.27 | 23 | Without | 0 | 0 | 15300 | Organopolysiloxane | 7.55 | - | - | - | - | 84 | C |
| Comparative Example 8 | Graphite | Average particle size 10µm | 8.55 | 5.13 | 23 | Silicone 7 | 3.77 | 50 | 5300 | Organopolysiloxane | 3.77 | 2.27 | 445 | 550 | 0.01622 | 20 | B |
| Comparative Example 9 | Graphite | Average particle size 10µm | 8.55 | 5.13 | 23 | Silicone 8 | 0.528 | 7 | 1300 | Organopolysiloxane | 7.02 | 1.35 | 375 | 480 | 0.00926 | 44 | C |

As is obvious from the above, IE/IF was within the predetermined range in each silicone composition produced in Examples, and as a result, the self-aggregation of the fluorescent silicone compound (B) was suppressed and an excellent flexibility was imparted.

In contrast, in the silicone compositions produced in Comparative Examples 1 to 5, 8, and 9, IE/IF was out of the predetermined range, so that the self-aggregation of the fluorescent silicone compound (B) was generated and an excellent flexibility was not successfully imparted. Since the silicone compositions produced in Comparative Examples 6 to 7 contained no fluorescent silicone compound (B), the inorganic filler (A) was not sufficiently dispersed in the composition and an excellent flexibility was not successfully imparted.

## Claims

1. A silicone composition comprising an inorganic filler (A), a fluorescent silicone compound (B), and a silicone resin (C) other than the fluorescent silicone compound (B),
an intensity ratio (IE/IF) of excimer emission intensity at a maximum wavelength of excimer emission (IE) to fluorescence intensity at a maximum wavelength of fluorescence of a non-associated form (IF) of the fluorescent silicone compound (B) upon fluorescence analysis of the silicone composition being 0.01 or more and 0.6 or less.

2. The silicone composition according to claim 1, wherein the fluorescent silicone compound (B) comprises a fluorescent silicone compound having a polycyclic aromatic structure.

3. The silicone composition according to claim 1 or 2, wherein the fluorescent silicone compound (B) is at least one selected from the group consisting of a fluorescent silicone compound (B1) having a structure of pyrene or a pyrene derivative and a fluorescent silicone compound (B2) having a structure of perylene or a perylene derivative.

4. The silicone composition according to claim 1 or 2, wherein the inorganic filler (A) is an inorganic filler having π electrons.

5. The silicone composition according to claim 4, wherein the inorganic filler having π electrons comprises at least one selected from the group consisting of boron nitride, a carbon nanotube, a carbon fiber, graphite, and graphene.

6. The silicone composition according to claim 3, wherein the fluorescent silicone compound (B1) having a structure of pyrene or a pyrene derivative has a maximum peak of fluorescence of the non-associated form at a wavelength range of 370 nm or more and 430 nm or less and has a maximum peak of excimer emission at a wavelength range of 430 nm or more and 550 nm or less.

7. The silicone composition according to claim 3, wherein the fluorescent silicone compound (B2) having a structure of perylene or a perylene derivative has a maximum peak of fluorescence of the non-associated form at a wavelength range of 430 nm or more and 530 nm or less and has a maximum peak of excimer emission at a wavelength range of 490 nm or more and 700 nm or less.

8. The silicone composition according to claim 1 or 2, wherein a content of the fluorescent silicone compound (B) is 5% by mass or more based on the total amount of the fluorescent silicone compound (B) and the silicone resin (C).

9. The silicone composition according to claim 1 or 2, wherein an amount of aromatic units of the fluorescent silicone compound (B) to a total specific surface area of the inorganic filler (A) is 0.0005 mmol/m² or more.

10. The silicone composition according to claim 1 or 2, wherein the silicone resin (C) is at least one of an organopolysiloxane having an alkenyl group and an organopolysiloxane having a hydrosilyl group.
